Europäisches Patentamt

European Patent Office

Office européen des brevets

(19)

(11) **EP 1 184 643 B1**

(12) **EUROPÄISCHE PATENTSCHRIFT**

(45) Veröffentlichungstag und Bekanntmachung des
Hinweises auf die Patenterteilung:
**28.09.2005 Patentblatt 2005/39**

(51) Int Cl.⁷: **G01C 21/26**, G06T 11/00

(21) Anmeldenummer: **00117523.1**

(22) Anmeldetag: **14.08.2000**

(54) **Verfahren zur Abbildung von Positionsinformation auf ein topographisches Modell eines Verkehrswegenetzes**

Method for mapping position information onto a topographical model of a road network

Procédé pour le mappage de l'information de position sur un modèle topographique d'un réseau de circulation routière

(84) Benannte Vertragsstaaten:
**AT BE CH CY DE DK ES FI FR GB GR IE IT LI LU MC NL PT SE**

(43) Veröffentlichungstag der Anmeldung:
**06.03.2002 Patentblatt 2002/10**

(73) Patentinhaber: **Deutsches Zentrum für Luft- und Raumfahrt e.V.**
**53175 Bonn (DE)**

(72) Erfinder: **Meier, Christoph**
**38102 Braunschweig (DE)**

(74) Vertreter: **Rehberg Hüppe + Partner**
**Postfach 31 62**
**37021 Göttingen (DE)**

(56) Entgegenhaltungen:
EP-A- 0 959 327      EP-A- 1 024 467
GB-A- 2 312 580      US-A- 5 594 650

• **DATABASE INSPEC [Online] INSTITUTE OF ELECTRICAL ENGINEERS, STEVENAGE, GB; FRITSCH D: "Analysis of remote sensing data in geographical information systems" Database accession no. 4340250 XP002158936 & EARSEL ADVANCES IN REMOTE SENSING, JULY 1992, FRANCE, Bd. 1, Nr. 3, Seiten 60-65, ISSN: 1017-4613**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 184 643 B1

**Beschreibung**

Die Erfindung bezieht sich auf ein Verfahren zur und eine Vorrichtung für die Abbildung von Positionsinformationen aus einem Ortsraum auf ein topographisches Modell eines Verkehrswegenetzes, das eine Mehrzahl von topographischen Elementen aufweist, um einer gemessenen Position in dem Ortsraum ein topographisches Element des Modells zuzuweisen.

Eine Abbildung von Positionsinformationen auf ein Modell eines Verkehrswegenetzes soll möglichst schnell ausführbar sein. Durch die Abbildung soll den Positionsinformationen ein topographisches Element des Modells zugewiesen werden. Das Ergebnis der Abbildung kann aber auch sein, daß kein Element oder ein Nullelement zugewiesen wird oder daß eine Menge von Elementen, d. h. mehrere Elemente, zugewiesen werden.

Ein topographisches Modell eines Verkehrswegenetzes stellt, nicht notwendiger Weise in maßstabsgetreuer Form, geographische Orte und Abmaße von Verkehrswegen dar. Auf einem solchen topographischen Modell kann ein topologisches Modell des Verkehrswegenetzes aufbauen, das die logischen Zusammenhänge zwischen den topographischen Elementen repräsentiert, also beispielsweise die Frage beantwortet, von welchem Verkehrsweg man auf welchen anderen gelangen kann. So wird beispielsweise das Element eines topographischen Modells durch Umrisse definiert. Sinnfällige Verknüpfungspunkte und deren Verbindungslinien zwischen den topographischen Elementen können als "Node(s)" und "Link(s)" die Topologie des Verkehrswegenetzes beschreiben. Eine Verknüpfung der topologischen Elemente mit den Elementen eines topographischen Modells eines Verkehrswegenetzes ist direkt möglich. Eine Zuordnung von gemessenen Positionen aus dem Ortsraum zu topologischen Elementen setzt aber voraus, daß diese Positionen zunächst den topographischen Elementen des Modells zugeordnet werden. Hiermit beschäftigt sich die vorliegende Erfindung.

Hinweise zur grundsätzlichen Modellierung von Verkehrwegenetzen finden sich in Meier, Christoph, : "Integrating topographical and topological Data in the Estimation of the actual Traffic Situation on Airports", Proceedings DGON International Radar Symposium RS98 Munich, Bonn, 1998, Seiten 791 ff; Meier, Christoph et al.: "Multisensor Data Position for an A-SMGCS-Concept and Results from Simulation and Field Test", Proceedings DGON International Symposium on A-SMGCS Stuttgart, Bonn, 1999, Seiten 231 ff; und Meier, Christoph: "Datenfusionsverfahren für die automatische Erfassung des Rollverkehrs auf Flughäfen" DLR FB98-32, Köln, 1998.

Bei der Abbildung von Positionsinformationen aus einem Ortsraum auf ein topographisches Modell eines Verkehrswegenetzes ist es erstrebenswert, daß die Abbildungsgeschwindigkeit möglichst unabhängig von der Größe und dem Detaillierungsgrad des Modells des Verkehrswegenetzes ist. Insbesondere soll die Abbildungsgeschwindigkeit möglichst wenig mit zunehmendem Detaillierungsgrad des Modells des Verkehrswegenetzes bzw. zunehmender Größe eines solchen Modells abfallen. Wenn diese Forderung nicht eingehalten werden kann, wird es bei einer Vielzahl von Anwendungen zu unerwünschten zeitlichen Verzögerungen gegenüber dem Zeitpunkt kommen, zu dem die Positionsinformationen ermittelt wurden.

Anwendungsbeispiele für Verfahren der eingangs beschriebenen Art sind die Zuordnung von Positionsinformationen über geortete Autos zu logischen Teilen eines Verkehrswegenetzes, also beispielsweise Straßen. Ein solches Verfahren ist z.B. aus den Dokumenten EP-A-1 024 467, GB-A-3 312 580 und US-A-5 594 650 bekannt und könnte Grundlage zur Routenplanung, Überwachung zeitlicher Abläufe und Früherkennung von Verkehrskonfliktsituationen sein. Eine weitere Anwendungsmöglichkeit betrifft die Überwachung des Rollverkehrs auf einem Flughafen.

Allgemeine Verfahren zur Überprüfung, ob sich eine Position innerhalb eines geschlossenen Polygons befindet, sind beispielsweise aus Sedgewick, R.: "Algorythem in C++", Eddison, Wesley, erste Auflage, 1992, Seiten 406 ff bekannt. Diese bekannten Verfahren basieren auf einem sequenziellen Vergleich der Position mit allen möglichen topographischen Elementen, wobei festgestellt wird, in welchem Umriß die jeweilige Position liegt, d. h. zu welchem topographischen Element die Position zuzuweisen ist. Allerdings ist diese Suchoperation relativ zeitaufwendig und ihr Zeitaufwand würde bei Anwendung auf dem Gebiet der vorliegenden Erfindung mit der Größe und dem Detaillierungsgrad des Modells des Verkehrswegenetzes zudem stark anwachsen.

Der Erfindung liegt daher die Aufgabe zugrunde, ein Verfahren und eine Vorrichtung der eingangs beschriebenen Art aufzuzeigen, mit denen die Abbildung von Positionsinformationen aus einem Ortsraum auf ein topographisches Modell eines Verkehrswegenetzes möglichst schnell durchführbar ist.

Erfindungsgemäß wird diese Aufgabe durch ein Verfahren mit den Merkmalen des Anspruchs 1 und eine Vorrichtung mit den Merkmalen des Anspruchs 8 gelöst.

Vorteilhafte Ausführungsformen des Verfahrens und der Vorrichtung sind in den abhängigen Ansprüchen 2 bis 7 bzw. 9 und 10 beschrieben.

Bei dem neuen Verfahren wird vorab eine Koordinatentransformation definiert, die den x- und y-Koordinaten jeder Position in dem Ortsraum die Indizes eines Rasterpunkts eines Rasters aus einer Vielzahl von diskreten Rasterpunkten zuordnet. Weiterhin vorab wird jeder Rasterpunkt des Rasters mit mindestens einem topographischen Element des Modells oder einem Nullelement verknüpft, und diese Verknüpfung wird in einem nach den Indizes der Rasterpunkte indexierten Array abgelegt. In der eigentlichen Anwendung des Verfahrens werden dann die x- und y-Koordinaten jeder in dem Ortsraum gemessenen Position gemäß der Koordinatentransformation den Indizes eines Rasterpunkts zugeordnet, und anschließend wird zu jeder gemessenen Position in dem Ortsraum das mit dem zugeordneten Rasterpunkt verknüpfte Element des Modells aus dem Array ausgelesen.

Diese Vorgehensweise kann als Training einer wiederverwertbaren Abbildungskarte vor der eigentlichen Laufzeit des Verfahrens angesehen werden. Bei dem Training wird das gesamte topographische Modell in einem festen Raster abgetastet, das dem Raster entspricht, auf das die Koordinatentransformation die Daten aus dem Ortsraum transformiert. Für jeden Rasterpunkt wird beispielsweise mit einem herkömmlichen langsamen Suchverfahren festgestellt, welchem topographischen Element er zuzuweisen ist, d. h. in welchem Umriß von welchem topographischen Element er sich befindet. Das jeweilige Suchergebnis wird in die Abbildungskarte in Form des nach den Indizes der Rasterpunkte indexierten Arrays eingetragen. Das Array ist dann ein Rasterbild des topographischen Modells. Die Rasterdichte, d. h. der Abstand der Rasterpunkte wird als Kompromiß zwischen der Erfassung von Modelldetails und dem erforderlichen Speicherplatz für das Array festgelegt. Das Training der Abbildungskarte bzw. das Erstellen des Arrays ist sehr zeitaufwendig. Das Training kann jedoch im wesentlichen automatisch erfolgen und ist nur einmal vor der eigentlichen Laufzeit des Verfahrens durchzuführen. Ein erneutes Training ist sonst nur dann erforderlich, wenn ein neues topographisches Modell des Verkehrswegenetzes zum Einsatz kommen soll. Konkret kann die trainierte Abbildungskarte bzw. das Array nach erfolgtem Training auf einem persistenten Massenspeicher eines Computers abgelegt und jedesmal vor der Lösung der eigentlichen Abbildungsaufgabe wieder in den Computer-Hauptspeicher geladen werden. Aufgrund des vorab erfolgten Trainings müssen zur Laufzeit des Verfahrens weder iterative Prozesse noch Suchprozesse durchgeführt werden. Die Zuordnung einer gemessenen Position in dem Ortsraum zu einem topographischen Element erfolgt statt dessen durch einfache Koordinatentransformation der x- und y-Koordinaten der gemessenen Position in Indizes eines Rasterpunkts und indirekten Speicherzugriff unter Verwendung dieser Indizes. Damit ist das erfindungsgemäße Verfahren nicht nur sehr schnell, sondern sogar echtzeitfähig.

Im Zuge der Schritte des Verfahrens, die während seiner eigentlichen Laufzeit ablaufen, kann auch überprüft werden, ob eine gemessene Position im Ortsraum überhaupt einer Position innerhalb des topographischen Modells entspricht oder aus diesem ganz herausfällt. Im letzteren Fall kann die gemessene Position verworfen werden, sie kann überprüft werden oder es kann ein Warnhinweis bezüglich dieser Position ausgegeben werden.

In einer bevorzugten Ausführungsform des neuen Verfahrens wird in das Array, in das die Verknüpfung der Indizes jedes Rasterpunkts mit einem topographischen Element des Modells oder dem Nullelement abgelegt wird, ein Identifizierungscode für das jeweilige Element des topographischen Modells eingetragen. Über diesen Eintrag in das erste Array ist ein Zugriff auf die Einträge eines zweiten Arrays möglich, das nach dem Identifizierungscodes indexiert ist und in das die Umrisse der jeweiligen topographischen Elemente des Modells abgelegt werden, so daß zu jeder Position in dem Ortsraum der Umriß des verknüpften topologischen Elements über den zuvor ermittelten Identifizierungscode aus dem zweiten Array auslesbar ist. Mit anderen Worten wird auch das zweite Array vor der eigentliche Laufzeit des Verfahrens soweit vorbereitet, daß während der Laufzeit des Verfahrens nur noch ein über das erste Array vermittelter Speicherzugriff erfolgt, der sehr schnell ist.

Es kann auch noch ein drittes, nach den Identifizierungscodes oder den Umrissen der topographischen Elemente indexiertes Array vorgesehen werden, indem dem jeweiligen topographischen Element des Modells zugeordnete topologische Elemente abgelegt werden, so daß zu jeder Position in dem Ortsraum die verknüpften topologischen Elemente über den zuvor ermittelten Identifizierungscode bzw. Umriß aus dem dritten Array auslesbar sind. Auch hierzu werden die aufwendigen Anlagearbeiten bereits vor der eigentlichen Laufzeit des Verfahrens durchgeführt, und während der Laufzeit des Verfahrens erfolgt nur noch ein über die Einträge in dem ersten bzw. zweiten Array vermittelter Speicherzugriff.

Bei Implementierung des neuen Verfahrens mit Hilfe verschiedener fortgeschrittener Programmiersprachen können Zeiger definiert werden, die von Umrissen der topographischen Elemente auf mit den topographischen Elementen verknüpfte topologische Elemente verweisen und umgekehrt.

In der bevorzugten Ausführungsform des neuen Verfahrens sind der Ortsraum und das topographische Modell diejenigen eines Flughafens. Bei der Überwachung des Rollverkehrs auf einem Flughafen hat sich das erfindungsgemäße Verfahren in der praktischen Erprobung bereits bewährt. Dabei war es möglich, das Verfahren ohne übermäßigen Rechneraufwand, der im wesentlichen durch den Umfang der den schnellen Speicherzugriff vermittelnden Arrays bestimmt wurde, nach dem Training der Abbildungskarte in Echtzeit durchzuführen.

Eine erfindungsgemäße Vorrichtung der eingangs beschriebenen Art weist Koordinatentransformationsmittel, die x- und y-Koordinaten jeder in dem Ortsraum gemessenen Position Indizes eines Rasterpunkts eines Rasters aus einer Vielzahl von diskreten Rasterpunkten zuordnen, Speichermittel für ein nach den Indizes der Rasterpunkte indexiertes Array, in dem die Verknüpfung der Indizes jedes Rasterpunkts des Rasters mit mindestens einem topographischen Element des Modells oder einem Nullelement abgelegt ist, und Auslesemittel auf, die zu jeder einem Rasterpunkt zugeordneten Position in dem Ortsraum das mit dem Rasterpunkt verknüpfte Element des Modells aus dem Array auslesen.

Vorzugsweise ist in dem Array, in dem die Verknüpfung der Indizes jedes Rasterpunkts mit einem topographischen Element des Modells oder dem Nullelement abgelegt ist, ein Identifizierungscode für das jeweilige Element des topographischen Modells eingetragen, wobei Speichermittel für ein zweites, nach den Identifizierungscodes indexiertes Array vorgesehen sind, in dem Umrisse der jeweiligen topographischen Elemente des Modells abgelegt sind, und wobei Auslesemittel vorgesehen sind, die zu jeder Position in dem Ortsraum, den Umriß des verknüpften topographischen Elements über den zuvor ermittelten Identifizierungscode aus dem zweiten Array auslesen.

Weiterhin ist eine Ausführungsform der Vorrichtung bevorzugt, bei der ein drittes, nach den Identifizierungscodes oder den Umrissen indexiertes Array vorgesehen ist, indem mit dem jeweiligen topographischen Element des Modells verknüpfte topologische Elemente abgelegt sind, wobei Auslesemittel vorgesehen sind, die zu jeder Position in dem Ortsraum die mit dem verknüpften topographischen Element verknüpften topologischen Elemente über den zuvor ermittelten Identifizierungscode bzw. Umriß aus dem dritten Array auslesen.

Die Erfindung wird im folgenden anhand von konkreteren Ausführungsbeispielen näher erläutert und beschrieben. Dabei zeigt

Figur 1  ein Blockdiagramm zum Ablauf des erfindungsgemäßen Verfahrens,

Figur 2  ein Blockdiagramm zum Aufbau der erfindungsgemäßen Vorrichtung und

Figur 3  einen Ausschnitt aus einem Modell eines Verkehrswegenetzes.

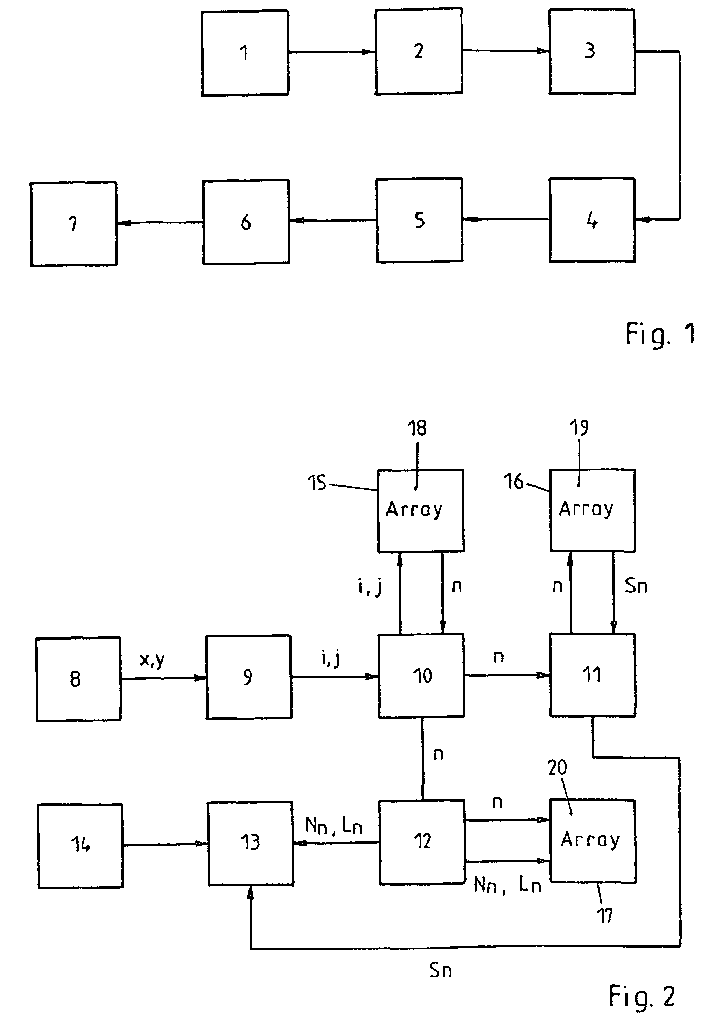

Die im Blockdiagramm gemäß Figur 1 dargestellten Verfahrensschritte sind in eine erste Gruppe von Schritten 1 bis 3 unterteilt, die vor der Laufzeit des eigentlichen Verfahrens bei der Abbildung von Positionsinformationen aus einem Ortsraum auf ein topographisches Modell eines Verkehrswegenetzes durchgeführt werden. Während der eigentlichen Laufzeit werden nur noch die Schritte 4 bis 7 für jede gemessene Position in dem Ortsraum durchgeführt.

Im Schritt 1 wird, sofern dieses nicht bereits vorliegt, ein topographisches Modell eines Verkehrswegenetzes, das einem realen Ortsraum zugeordnet ist, definiert. Dieses topographische Modell umfaßt topographische Elemente, die wiederum topologischen Elementen zugeordnete sein können. Topographische Elemente sind durch ihre Umrisse innerhalb des Modells definiert. Topologische Elemente stehen für Sinngehalte der topographischen Elemente und deren sinnfällige Verknüpfungen. Die Definition des topographischen Modells umfaßt bei dem erfindungsgemäßen Verfahren eine Zuordnung von Umrissen zu Identifizierungscodes für die einzelnen topographischen Elemente und eine Zuordnung von topologischen Elementen, die mit den jeweiligen topographischen Elementen verknüpft sind, entweder zu den Identifizierungscodes oder den Umrissen der jeweiligen topographischen Elemente. Die Zuordnung erfolgt vorzugsweise in Form von zwei Arrays, die nach den Identifizierungscodes und den Identifizierungscodes bzw. den Umrissen indexiert sind, oder in Form von sogenannten Zeigern.

Im Schritt 2 des Verfahrens wird eine Koordinatentransformation definiert, die gemessene Ortskoordinaten in Indizes von Rasterpunkten eines Rasters von diskreten Rasterpunkten transformiert. Das Raster kann als Fangraster über dem topographischen Modell des Verkehrswegenetzes angesehen werden. Das Rastermaß des Rasters bestimmt die Auflösung, mit der im Ortsraum gemessene x- und y-Koordinaten verarbeitet werden. Mit zunehmendem Rastermaß sinkt die Anzahl der Rasterpunkte bei gleicher Gesamtabdeckung und es geht Detailtreue verloren.

Im Schritt 3 wird jeder der Rasterpunkte des Rasters mit einem Identifizierungscode mindestens eines topographischen Elements des Modells des Verkehrswegenetzes verknüpft, beispielsweise indem jeder Rasterpunkt dem topographischen Elemente zugeordnet wird, in dessen Umriß er sich befindet. Diese Verknüpfung wird in einem Array abgelegt, das nach den Indizes der Rasterpunkte indexiert ist und dessen Einträge die zu den Indizes zugehörigen Identifizierungscodes der topographischen Elemente sind.

Nach diesen Vorarbeiten ist die Durchführung der Abbildung von Positionsinformationen aus dem Ortsraum auf die zugehörigen topographischen Elemente unter Zuordnung der verknüpften topologischen Elemente während der eigentlichen Laufzeit des Verfahrens mit den Schritten 4 bis 7 einfach und insbesondere sehr schnell. Im Schritt 4 wird eine Koordinatentransformation der x- und y-Koordinaten der jeweils im Ortsraum gemessenen Position durchgeführt. Dabei werden den x- und y-Koordinaten Indizes eines Rasterpunkts zugeordnet. Mit diesen Indizes erfolgt im Schritt 5 der Zugriff auf den zu dem Rasterpunkt zugehörigen Identifizierungscode über das im Schritt 3 ermittelte Array. Der Identifizierungscode erlaubt es, im Schritt 6 auf ein aus dem Schritt 1 stammendes Array zuzugreifen, über das die Identifizierungscodes mit dem Umrissen der einzelnen topographischen Elemente verknüpft sind. Im Schritt 7 wird letztlich eine Zugriff auf die mit dem jeweiligen topographischen Element verknüpften topologischen Elemente durchgeführt. Dies erfolgt beispielsweise über ein aus dem Schritt 1 stammendes Array je nach dessen Indexierung entweder über den Identifizierungscode oder den Umriß des jeweiligen topographischen Elements. Damit ist eine vollständige Abbildung einer gemessenen Position in dem Ortsraum auf das topographische Modell erfolgt.

Die erfindungsgemäße Vorrichtung gemäß Figur 2 erhält von einer Positionsmeßeinrichtung 8, die eine Position im Ortsraum bestimmt, die x- und y-Koordinaten der jeweiligen Positionen. Diese x- und y-Koordinaten werden in Koordinatentransformationsmitteln 9 in Indizes i, j eines diskreten Rasterpunkts transformiert. Unter Verwendung der Indizes i, j, lesen Auslesemittel 10 aus dem in einem Speicher 15 gespeicherten Array 18 den Identifizierungscode n des zu dem Rasterpunkt i, j zugehörigen topographischen Elements aus. Auslesemittel 11 lesen dann unter Verwendung des Identifizierungscodes n aus dem in einem Speicher 16 gespeicherten Array 19 den Umriß ("Shape") $S_n$ des jeweiligen topographischen Elements aus. Weiterhin lesen Auslesemittel 12, hier unter Verwendung des Identifizierungscodes n, zu dem topographischen Element zugehörige topologische Elemente ("Node(s)" und "Link(s)") $N_n$ und $L_n$ aus dem in einem Speicher 17 gespeicherten Array 20 aus. Auf einer Darstellungseinrichtung 13 werden die Umrisse $S_n$ und die topologischen Elemente $N_n$ und $L_n$ mit einer Darstellung des Modells zusammengeführt, die in einem Speicher 14 abgelegt ist. Die Darstellungseinrichtung 13 kann ein Bildschirm sein, auf dem die Bewegung des Rollverkehrs auf einem Flugplatz überwacht wird.

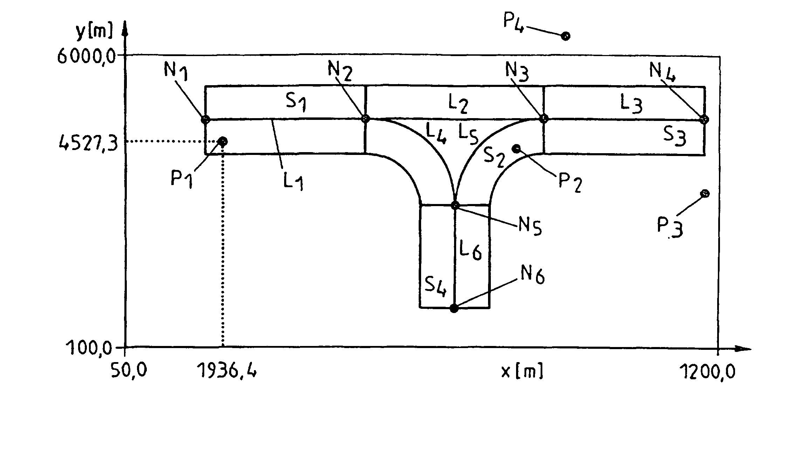

In Figur 3 sind die Umrisse ("Shape(s)") $S_1$, $S_2$, $S_3$ und $S_4$ von topographischen Elementen eines Beispielmodells eines Verkehrswegenetzes wiedergegeben. Die Knoten ("Node(s)") $N_1$, $N_2$, $N_3$, $N_4$, $N_5$ und $N_6$ sowie die Kanten ("Link(s)") $L_1$, $L_2$, $L_3$, $L_4$, $L_5$ und $L_6$ beschreiben die Topologie, d. h. die den topographischen Elementen zugeordneten topologischen Elemente. In Figur 3 weiterhin dargestellte Positionen $P_1$, $P_2$, $P_3$ und $P_4$ sollen nun einer topologischen Kante $L_n$ zugeordnet werden. Dazu muß zunächst die Zuordnung zu einem topographischen Element durchgeführt werden. Die topologischen Elemente sind direkt mit den topographischen Elementen verknüpft. Beispielsweise gehören zur Definition der Kante $L_1$ die Attribute:

- Verbindet die Knoten $N_1$ und $N_2$
- liegt im Umriß S1
- entspricht einem Rollbahnabschnitt mit dem Namen "27R".

Der in Figur 3 markierte Bereich mit der linken unteren Ecke (50,0; 100,00) und der rechten oberen Ecke (12.000,0; 6.000,0) stellt die Grenzen des Modells dar und entspricht einem Ortsraum mit der Angabe der X- und Y-Koordinaten in Metern. Über den Modellbereich wird ein Raster mit einer Auflösung, d. h. einem Rastermaß, von hier 1 m gelegt. Das Raster besteht aus (6.000 - 100 + 1) * (12.000 - 50 + 1) Rasterpunkten, wobei der Rand des Modells mitberücksichtigt ist. Da es in dem Beispiel nur 4 Umrisse gibt und noch der Fall "kein Umriß" codierbar sein soll, reicht für die Festlegung des Identifizierungscodes eine Codierung mit drei Bit pro Rasterpunkt aus. Der Einfachheit halber kann jedem Rasterpunkt, d. h. jedem Eintrag in dem Array 18 aber 1 byte zugeordnet werden. Entsprechend erfordert das Array 18 dann 5.901 * 11.951 * 1 Byte = ca. 70,5 MB Speicherplatz. In dem Schritt 3 gemäß Figur 1 wird für jeden Rasterpunkt festgestellt, innerhalb welchen Umrisses $S_n$ er sich befindet. der entsprechende Identifizierungscode n wird in das Array 18 eingetragen. Das Abtasten ist zeitaufwendig, daher wird nach Erfolg der Abtastung das Array 18, beispielsweise analog einem Grauwertbild auf einer Festplatte abgespeichert. Beim nächsten Programmstart wird das Grauwertbild dann wieder in den Arbeitsspeicher eingelesen. Wenn dann zur Laufzeit des Verfahrens die Punkte $P_1$ bis $P_4$ einem topologischen Element zugeordnet werden sollen, wird im einzelnen folgendes durchgeführt. Die von der Positionsmeßeinrichtung 8, z. B. einem Radargerät, gelieferten x- und y-Koordinaten der Positionen im Ortsraum $P_1$ = (x=1936,4; y=4527,3) werden zunächst mit folgender Koordinatentransformation in ein Index-Paar (i;j) des zugehörigen Rasterpunkts umgerechnet:

$$i = (long)((y*offsetY) * scale+0,5)$$

$$j = (long)((x*offsetX) * scale+0,5)$$

Die Parameter offsetY und offsetX werden aus der linken unteren Ecke des Modellbereichs bestimmt, scale ist der reziproke Wert der Auflösung des Rasters res:

$$offsetX = xmin = 50,0$$

$$offsetY = ymin = 100,0$$

$$scale = 1,0/res = 1,0$$

In dem Index-Paar sind i = (long)( (1936,4-50,0)*1,0+0,5)=1887 und j = (long)( (4527,3-100,0)*1,0+0,5)=4428 jetzt durch die Rundung ganze Zahlen. Zunächst wird dann überprüft, ob ein Zugriff auf das Array 18 mit den berechneten Indizes i und j die Grenzen des Rasters verletzen würde. Werden die Grenzen des Rasters beim betrachteten Punkt $P_1$ nicht verletzt, so erfolgt der Zugriff und es wird direkt der Identifizierungscode 1 für das zugehörige topographische Element zurückgegeben. Werden die Grenzen des Rasters wie z. B. beim Punkt $P_4$ verletzt, so wird der Identifizierungscode 0 zurückgeliefert. Ist der ausgelesene Rasterpunkt beim Abtastvorgang nicht innerhalb eines

Umrisses $S_n$ gewesen, wie z. B. bei $P_3$, so kommt aus dem Array 18 ebenfalls der Identifizierungscode 0 zurück, hier jedoch als Folge eines entsprechenden Eintrags in dem Array I.

Über das Array 19 werden die Identifizierungscodes mittels indirekter Adressierung in die Zeiger (in der Programmiersprache C++) auf die zugehörigen Umrisse $S_n$ umgesetzt. Der Identifizierungscode wird direkt als Adresse in das Array 19 verwendet. Damit fallen keine Suchoperationen an. Das Array 19 enthält in dem vorliegenden Beispiel fünf Zeiger auf $\{0, S_1, S_2, S_3, S_4\}$. Der Identifizierungscode 0 wird dabei in den Null-Zeiger umgesetzt, der Identifizierungscode 1 in den Zeiger auf Umriß $S_1$ usw.. Der in dem Schritt 5 des Verfahrens für den Meßpunkt $P_1$ bestimmte Identifizierungscode 1 wird dem Schritt 6 also in den Zeiger auf den Umriß $S_1$ umgesetzt. Die Umrisse und verknüpfte topologische Elemente in Form von Kanten und Knoten sind im Hauptspeicher so als C++-Objekte abgelegt, daß sie über Zeiger aufeinander verweisen. Insbesondere enthält jeder Umriß $S_n$ eine Liste von Zeigern auf Kanten $L_n$. Diese Liste kann auch leer sein. Für den Umriß $S_1$ enthält diese Liste genau einen Zeiger, nämlich auf die Kante $L_1$. Die Verknüpfung zwischen den Umrissen $S_n$ und den Kanten $L_n$ kann auch als weiteres Array 20 (Figur 2) angelegt werden. Dies ist bei Verwendung der Programmiersprache C++ aber nicht bevorzugt. In jedem Fall ist der Meßpunkt $P_1$ bei dem neuen Verfahren ohne jede Suchoperation oder Iteration über den Identifizierungscode 1 und die Zuweisung des Umrisses $S_1$ und der Kante $L_1$ eindeutig in das Modell des Verkehrswegenetzes abgebildet worden. Im Fall von $P_2$ wird im ersten Schritt der Identifizierungscode 2 des verknüpften topographischen Elements festgestellt. Im zweiten Schritt wird der Identifizierungscode 2 als Umriß $S_2$ entschlüsselt, und im letzten Schritt die Verknüpfung zwischen $S_2$ und den Kanten $L_2$, $L_4$ und $L_5$ vollzogen. Im Fall von P3 wird festgestellt, daß dieser innerhalb keines topographischen Elements liegt. Entsprechend erfolgt keine Abbildung, aber beispielsweise ein Warnhinweis an den Anwender.

Bei der Implementierung des neuen Verfahrens steigt zwar der Speicherbedarf mit der Größe des Modells bzw. der Verbesserung seiner Auflösung in jeder Richtung linear an, d. h. bei Berücksichtigung von zwei Raumrichtungen quadratisch. Der Zeitbedarf für die Durchführung des Verfahrens nimmt aber nicht im selben Maße zu, da auch bei sehr großen Arrays ein direkter Zugriff auf deren Einträge erfolgt.

**Patentansprüche**

1. Verfahren zur Abbildung von Positionsinformationen aus einem Ortsraum auf ein topographisches Modell eines Verkehrswegenetzes, das eine Mehrzahl von topographischen Elementen aufweist, um einer gemessenen Position in dem Ortsraum ein topographisches Element des Modells zuzuweisen,

- wobei vorab eine Koordinatentransformation definiert wird, die die x- und y-Koordinaten jeder Position in dem Ortsraum Indizes eines Rasterpunkts eines Rasters aus einer Vielzahl von diskreten Rasterpunkten zuordnet, und
- wobei weiterhin vorab jeder Rasterpunkt des Rasters mit mindestens einem topographischen Element des Modells oder einem Nullelement verknüpft wird und diese Verknüpfung in einem nach den Indizes der Rasterpunkte indexierten Array abgelegt wird,
- wobei dann die x- und y-Koordinaten jeder in dem Ortsraum gemessenen Position gemäß der Koordinatentransformation den Indizes eines Rasterpunkts zugeordnet werden und
- wobei dann zu jeder gemessenen Position in dem Ortsraum das mit dem zugeordneten Rasterpunkt verknüpfte Element des Modells aus dem Array ausgelesen wird.

2. Verfahren nach Anspruch 1, **dadurch gekennzeichnet, daß** in das Array, in das die Verknüpfung der Indizes jedes Rasterpunkts mit einem topographischen Element des Modells oder dem Nullelement abgelegt wird, ein Identifizierungscode für das jeweilige Element des topographischen Modells eingetragen wird.

3. Verfahren nach Anspruch 2, **dadurch gekennzeichnet, daß** in ein zweites, nach den Identifizierungscodes indexiertes Array Umrisse der jeweiligen topographischen Elemente des Modells abgelegt werden und daß zu jeder Position in dem Ortsraum der Umriß des verknüpften topographischen Elements über den zuvor ermittelten Identifizierungscode aus dem zweiten Array ausgelesen wird.

4. Verfahren nach Anspruch 2 oder 3, **dadurch gekennzeichnet, daß** in ein drittes, nach den Identifizierungscodes oder den Umrissen indexiertes Array mit dem jeweiligen topographischen Element des Modells verknüpfte topologische Elemente abgelegt werden und daß zu jeder Position in dem Ortsraum die mit dem verknüpften topographischen Element verknüpften topologischen Elemente über den zuvor ermittelten Identifizierungscode bzw. Umriß aus dem dritten Array ausgelesen wird.

5. Verfahren nach Anspruch 3 oder 4, **dadurch gekennzeichnet, daß** Zeiger definiert werden, die von Umrissen der topographischen Elemente auf mit den topographischen Elementen verknüpfte topologische Elemente verweisen und umgekehrt.

6. Verfahren nach einem der Ansprüche 1 bis 5, **dadurch gekennzeichnet, daß** der Ortsraum und das topographische Modell diejenigen eines Flughafens sind.

**7.** Verfahren nach einem der Ansprüche 1 bis 6, **dadurch gekennzeichnet, daß** es in Echtzeit durchgeführt wird.

**8.** Vorrichtung für die Abbildung von Positionsinformationen aus einem Ortsraum auf ein topographisches Modell eines Verkehrswegenetzes, das eine Mehrzahl von topographischen Elementen aufweist, um einer gemessenen Position in dem Ortsraum ein topographisches Element des Modells zuzuweisen,

- mit Koordinatentransformationsmitteln (9) zur Zuordnung von Indizes eines Rasterpunkts eines Rasters aus einer Vielzahl von diskreten Rasterpunkten zu x- und y-Koordinaten jeder in dem Ortsraum gemessenen Position,
- mit Speichermitteln (15) für ein nach den Indizes der Rasterpunkte indexiertes Array (18) zur Ablage der Verknüpfung der Indizes jedes Rasterpunkts des Rasters mit mindestens einem topographischen Element des Modells oder einem Nullelement, und
- mit Auslesemitteln (10), die so angeordnet sind, dass sie zu jeder, einem Rasterpunkt zugeordneten Position in dem Ortsraum das mit dem Rasterpunkt verknüpfte Element des Modells aus dem Array (18) auslesen.

**9.** Vorrichtung nach Anspruch 8, **dadurch gekennzeichnet, daß** in dem Array (I), in dem die Verknüpfung der Indizes jedes Rasterpunkts mit einem topographischen Element des Modells oder dem Nullelement abgelegt ist, ein Identifizierungscode (n) für das jeweilige Element des topographischen Modells eingetragen ist, daß Speichermittel (16) für ein zweites, nach den Identifizierungscodes indexiertes Array (19) vorgesehen sind, in dem Umrisse ($S_n$) der jeweiligen topographischen Elemente des Modells abgelegt sind, und daß Auslesemittel (11) vorgesehen sind, die zu jeder Position in dem Ortsraum den Umriß ($S_n$) des verknüpften topographischen Elements über den zuvor ermittelten Identifizierungscode (n) aus dem zweiten Array (19) auslesen.

**10.** Vorrichtung nach Anspruch 8 oder 9, **dadurch gekennzeichnet, daß** ein drittes, nach den Identifizierungscodes (n) oder den Umrissen indexiertes Array (20) vorgesehen ist, in dem mit dem jeweiligen topographischen Element des Modells verknüpfte topologische Elemente ($N_n$, $L_n$) abgelegt sind, und daß Auslesemittel (12) vorgesehen sind, die zu jeder Position in dem Ortsraum die mit dem verknüpften topographischen Element verknüpften topologischen Elemente über den zuvor ermittelten Identifizierungscode (n) bzw. Umriß ($S_n$) aus dem dritten Array (20) auslesen.

## Claims

**1.** Method for mapping position information out of a three-dimensional space onto a topographical model of a road network, which comprises a plurality of topographical elements, to allocate a topographical element of the model to a measured position in the three-dimensional space,

- wherein a transformation of coordinates is defined upfront, which allocates indexes of one screen point of a screen made of a plurality of discrete screen points to the x- and y-coordinates of each position in the three-dimensional space, and
- wherein further upfront each screen point of the screen is associated with at least one topographical element of the model or with a zero element and this association is registered in an array which is indexed according to the indexes of the screen points,
- wherein then the x- and y-coordinates of each position measured in the three-dimensional space are allocated to the indexes of one screen point according to the transformation of coordinates, and
- wherein then the element of the model which is associated with the allocated screen point is taken from the array for each measured position in the three-dimensional space.

**2.** Method according to claim 1, **characterized in that** an identification code for the respective element of the topographical model is written into the array in which the association of the indexes of each screen point with a topographical element of the model or with the zero element is registered.

**3.** Method according to claim 2, **characterized in that** contours of the respective topographical elements of the model are registered in a second array indexed according to the identification codes, and that the contour of the associated topographical element is read from the second array by means of the previously determined identification code for each position in the three-dimensional space.

**4.** Method according to claim 2 or 3, **characterized in that** topological elements which are associated with the respective topographical element of the model are registered in a third array indexed according to the identification codes or the contours, and that the topological elements which are associated with the associated topographical element are read out of the third array by means of the previously determined identification code or contour for each position in the three-dimensional space.

5. Method according to claim 3 or 4, **characterized in that** pointers are defined, which point from contours of the topographical elements to the topological elements associated with the topographical elements and vice versa.

6. Method according to any of the claims 1 to 5, **characterized in that** the three-dimensional space and the topographical model are both that of an airport.

7. Method according to any of the claims 1 to 6, **characterized in that** it is carried out in real time.

8. Device for mapping position information out of a three-dimensional space onto a topographical model of a road network, which comprises a plurality of topographical elements, to allocate a topographical element of the model to a measured position in the three-dimensional space, the device comprising

   - coordinate transformation means (9) for allocating indexes of a screen point of a screen consisting of a plurality of discrete screen points to x- and y-coordinates of each position measured in the three-dimensional space,
   - storing means (15) for an array (18) which is indexed according to the indexes of the screen points and which is provided for registering the association of the indexes of each screen point of the screen with at least one topographical element of the model or with a zero element, and
   - reading means (10) which are provided in such a way that they read for each position in the three-dimensional space allocated to a screen point the element of the model which is associated with that screen point out of the array (18).

9. Device according to claim 8, **characterized in that** an identification code (n) for the respective element of the topographical model is written into the array (I) in which the association of the indexes of each screen point with a topographical element of the model or with the zero element is registered, that storing means (16) are provided for a second array (19) which is indexed according to the identification codes and in which contours $(S_n)$ of the respective topographical elements of the model are registered, and that reading means (11) are provided which read the contour $(S_n)$ of the associated topographical element for each position in the three-dimensional space out of the second array (19) by means of the previously determined identification code (n).

10. Device according to claim 8 or 9, **characterized in that** a third array (20) is provided which is indexed according to the identification codes (n) or the contours and in which the topological elements $(N_n, L_n)$ which are associated with the respective topographical element are registered, and that reading means (12) are provided, which read for each position in the three-dimensional space the topological elements which are associated with the associated topographical element out of the third array (20) by means of the previously determined identification code (n) or contour $(S_n)$.

## Revendications

1. Procédé de reproduction d'informations de position provenant d'un espace local sur un modèle topographique d'un réseau de voies de circulation, qui comporte une pluralité d'éléments topographiques afin d'assigner à une position mesurée dans l'espace local un élément topographique du modèle,

   - dans lequel au préalable est définie une transformation de coordonnées qui affecte, à des coordonnées x et y de chaque position dans l'espace local, des indices d'un point de trame d'une trame constituée d'un grand nombre de points de trame discrets, et

   - dans lequel en outre au préalable chaque point de la trame est corrélé à au moins un élément topographique du modèle ou à un élément zéro et cette corrélation est mémorisée dans un ensemble indexé suivant les indices des points de trame,

   - dans lequel ensuite les coordonnées x et y de chaque position mesurée dans l'espace local sont affectées suivant la transformation des coordonnées aux indices d'un point de trame, et

   - dans lequel ensuite pour chaque position mesurée dans l'espace local, l'élément du modèle, corrélé au point de trame associé, est extrait de l'ensemble.

2. Procédé selon la revendication 1, **caractérisé en ce que** dans l'ensemble, dans lequel est enregistrée la corrélation des indices de chaque point de trame avec un élément topographique du modèle ou avec l'élément zéro, on mémorise un code d'identification pour chaque élément du modèle topographique.

3. Procédé selon la revendication 2, **caractérisé en ce que** dans un deuxième ensemble, indexé suivant les codes d'identification, sont mémorisés des contours des éléments topographiques respectifs du modèle, et **en ce que** pour chaque position dans l'espace local, le contour de l'élément topographique corrélé est extrait du deuxième ensemble par le code d'identification déterminé au préalable.

4. Procédé selon la revendication 2 ou 3, **caractérisé en ce que** dans un troisième ensemble, indexé suivant les codes d'identification ou les contours, sont mémorisés des éléments topologiques corrélés à l'élément topographique respectif du modèle, et **en ce que** pour chaque position dans l'espace local, les éléments topologiques, corrélés à l'élément topographique corrélé, sont extraits du troisième ensemble par le code d'identification déterminé au préalable ou le contour.

5. Procédé selon la revendication 3 ou 4, **caractérisé en ce que** sont définis des indexes qui, depuis des contours des éléments topographiques, renvoient aux éléments topologiques reliés aux éléments topographiques, et inversement.

6. Procédé selon l'une des revendications 1 à 5, **caractérisé en ce que** l'espace local et le modèle topographique sont ceux d'un aéroport.

7. Procédé selon l'une des revendications 1 à 6, **caractérisé en ce qu'**il est exécuté en temps réel.

8. Dispositif de reproduction d'informations de position provenant d'un espace local sur un modèle topographique d'un réseau de voies de circulation, qui comporte une pluralité d'éléments topographiques afin d'assigner à une position mesurée dans l'espace local un élément topographique du modèle,

   - comportant des moyens de transformation des coordonnées (9) pour l'affectation d'indices d'un point de trame d'une trame constituée d'un grand nombre de points de trame discrets à des coordonnées x et y de chaque position mesurée dans l'espace local,

   - comportant des moyens de mémorisation (15) pour un ensemble (18) indexé suivant les indices des points de trame, pour mémoriser la corrélation des indices de chaque point de la trame avec au moins un élément topographique du modèle ou un élément zéro, et

   - comportant des moyens d'extraction (10) qui sont disposés de manière à extraire de l'ensemble (18) pour chaque position affectée à un point de trame, dans l'espace local, l'élément corrélé au point de trame, du modèle.

9. Dispositif selon la revendication 8, **caractérisé en ce que** dans l'ensemble (I), dans lequel la corrélation des indices de chaque point de trame avec un élément topographique du modèle ou l'élément zéro est mémorisée, un code d'identification (n) pour l'élément respectif du modèle topographique est enregistré, **en ce que** des moyens de mémorisation (16) sont prévus pour un deuxième ensemble (19), indexé suivant les codes d'identification, dans lequel sont mémorisés des contours ($S_n$) des éléments topographiques respectifs du modèle, et **en ce que** sont prévus des moyens d'extraction (11) qui, pour chaque position dans l'espace local, extrait du deuxième ensemble (19) le contour ($S_n$) de l'élément topographique corrélé, par les codes d'identification (n) déterminés au préalable.

10. Dispositif selon la revendication 8 ou 9, **caractérisé en ce qu'**il et prévu un troisième ensemble (20), indexé suivant les codes d'identification (n) ou les contours, dans lequel sont mémorisés des éléments topologiques ($N_n$, $L_n$) corrélés à l'élément topographique respectif du modèle, et **en ce que** sont prévus des moyens d'extraction (12) qui extraient du troisième ensemble (20), pour chaque position dans l'espace local, les éléments topologiques corrélés à l'élément topographique corrélé, par les codes d'identification (n) déterminés au préalable ou le contour ($S_n$).

Fig. 1

Fig. 2